# EUROPÄISCHE PATENTSCHRIFT

(11) **EP 1 595 439 B1**
(45) Veröffentlichungstag und Bekanntmachung des Hinweises auf die Patenterteilung: **02.07.2008**
(21) Anmeldenummer: 05009888.8
(22) Anmeldetag: 06.05.2005
(51) Int. Cl.: A01F 15/07

(54) **Maschine zum Aufnehmen und Pressen von landwirtschaftlichem Erntegut**
Device for picking up and pressing of harvested agricultural crop
Dispositif pour ramasser et compacter des matières récoltées

(30) Priorität: 11.05.2004 DE 102004023699
(43) Veröffentlichungstag der Anmeldung: 16.11.2005
(73) Patentinhaber: Maschinenfabrik Bernard Krone GmbH, 48480 Spelle (DE)
(72) Erfinder: Krone, Bernard Dr.-Ing. E.h., 48480 Spelle (DE); Martensen, Klaus Dr.-Ing., 48477 Hörstel (DE); Hinsch, Werner Dipl.-Ing., 48480 Spelle (DE)

(56) Entgegenhaltungen:
- WO-A-97/03550
- US-A- 5 622 104
- US-A- 6 098 391
- US-B1- 6 272 825

## Beschreibung

Die Erfindung bezieht sich auf eine Maschine zum Aufnehmen und Pressen von landwirtschaftlichem Erntegut wie beispielsweise Heu, Stroh oder Gras oder dergleichen zu rollenförmigen Ballen mit einer mittels eines Fahrgestells klappbaren Wickelkammer sowie mit einer mit einer Spannkraft eines Spannkrafterzeugers beaufschlagbaren Ballenformeinrichtung.

Aus der DE 696 07 969 T4 ist eine Rundballenpresse der eingangs genannten Art bekannt, bei der zwei Riemenspanneinrichtungen vorgesehen sind, um einen Ballen mit einem relativ weichen Kern zu erzeugen. Zur Erzeugung dieses weichen Kerns wird die Wirkung einer ersten Spanneinrichtung durch die Wirkung einer zweiten Spanneinrichtung aufgehoben. Die erste Spanneinrichtung bringt bei der Kembildung nur einen Druck auf, der ausreicht, um ein Anhaften der Riemen der Ballenformeinrichtungen an dem Ballen zu sichern. Nach Formung des relativ weichen Kerns des zu formenden Ballens kann eine erhöhte Spannkraft aufgebracht werden, die jedoch nicht ausreicht, um gleichmäßig verdichtete Ballen zu erzeugen.

Die US 5,622,104 A offenbart einen Ballenpacker zur Herstellung zylindrischer Ballen, wobei über umlaufende Bänder eine Ballenformkammer ausgebildet wird, welche sich während der Ballenbildung von einem kleinen Anfangsraum bis hin zu einer Größe ausdehnen kann, die einem Großballen entspricht. Damit der Ballen während der Ballenbildung eine ausreichend Pressdichte erhält, ist der Ballenpacker mit einer Spanneinrichtung für die Bänder der Ballenformkammer versehen, welche insbesondere von hydraulisch ansteuerbaren Zylindern gebildet ist und von einer Hydraulikquelle über zwischengeschaltete Ventile, die auf unterschiedliche Druckniveaus einstellbar sind, mit dem Druckmedium versorgt wird.

Soll ein geformter Ballen ausgebracht werden, ist eine Heckklappe der Wickelkammer über Hydraulikzylinder zu öffnen. Dazu ist die Spannkraft der Spannkrafterzeuger zu reduzieren. Bei bekannten Maschinen geschieht dies dergestalt, dass der Druck von Stellzylindern, die auf die Ballenformeinrichtung wirken, auf null gesetzt wird und mithin das Drucksystem drucklos geschaltet wird. Dies kann allerdings zu Schlupferscheinungen und mithin zu Störungen der Weiterförderung der Ballenformeinrichtung führen.

Es ist Aufgabe der Erfindung, eine Maschine der eingangs genannten Art zu schaffen, bei der ein beeinträchtigungsfreier Betrieb der Ballenformeinrichtung auch bei Abgabe eines Ballens sicherzustellen ist.

Zur Lösung dieser Aufgabe zeichnet sich die Maschine der eingangs genannten Art durch die im kennzeichnenden Teil des Anspruchs 1 angegebenen Merkmale aus. Hinsichtlich wesentlicher weiterer Ausgestaltungen wird auf die Ansprüche 2 bis 9 verwiesen.

Damit ist eine Maschine zur Verfügung gestellt, bei der automatisch mit Betätigung der Heckklappe im Öffnungssinne die Spannkraft des Spannkrafterzeugers selbsttätig auf eine, für einen schlupffreien Weiterbetrieb der Ballenformeinrichtung reduzierte Spannkraft selbsttätig zu vollziehen ist. Mit dem Öffnen der Heckklappe ist die der Heckklappe zugeordnete Ballenformeinrichtung daher einfach nachzuholen, wobei die ansonsten vorliegende Spannkraft des Spannkrafterzeugers, die zur Erzeugung von festen Ballen erforderlich ist, kein Hindernis mehr darstellt.

Bevorzugterweise ist die Maschine auch derart auszubilden, dass bei einem nachfolgenden Schließvorgang die für eine gewünschte Verdichtung des Ballens bevorzugte Krafterhöhung wiederum automatisch aufgebaut werden kann. Dies alles lässt sich mit konstruktiv einfachen Mitteln vollziehen.

Bevorzugterweise sind zwei oder mehr Spannkrafterzeuger vorgesehen, die zweckmäßigerweise als Hydraulikzylinder ausgebildet sind. Durch eine entsprechende Auswahl von mit den Spannkrafterzeuger zusammenwirkenden Spannarmen lässt sich die Verspannung der Ballenformeinrichtung linear dem Durchmesser des zuformenden Ballens anpassen. In einer besonders bevorzugten Ausbildung sind die Spannkrafterzeuger einerseits als Druck- und andererseits als Zugzylinder ausgebildet, die untereinander hydraulisch gekoppelt sind, um untereinander einen Hydraulikmediumaustausch vollziehen zu können. Des weiteren ist es bevorzugtermassen so, dass die Spannkraft zumindest eines Spannkrafterzeugers mit Aufklappen der Wickelkammer auf einen vorgebbaren Maximalwert herabsetzbar ist, um einen Auswurfvorgang mit Aufklappen der Wickelkammer bei der Vorspannung der Ballenformeinrichtung berücksichtigt zu haben.

Weitere Einzelheiten der vorliegenden Erfindung ergeben sich aus der nachfolgenden Beschreibung und der Zeichnung. In der Zeichnung zeigen:
- Figur 1:: eine erfindungsgemäße Maschine mit einer von insgesamt drei Zylindern kraftbeaufschlagbaren Ballenformeinrichtung,
- Figur 2:: mit einer schematischen Darstellung eine mit Zylindern versehene Baugruppe in einer ersten Position,
- Figur 3:: mit einer schematischen Darstellung den Gegenstand nach Figur 2 in einer weiteren Position,
- Figur 4:: einen Schaltplan zum Betrieb des in den Figuren 1 bis 3 dargestellten Maschinenaggregates.

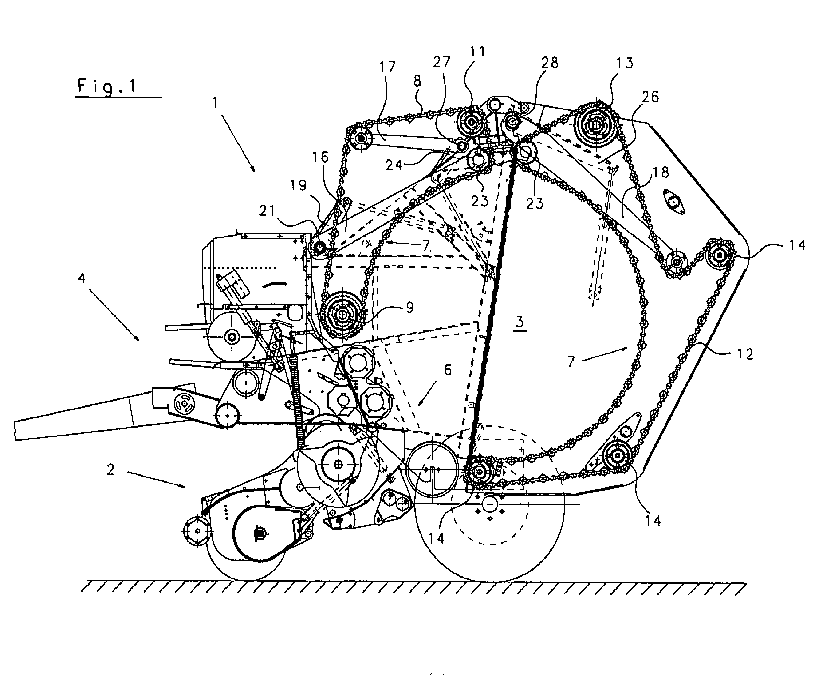

In der Figur 1 ist eine erfindungsgemäße Maschine 1 zum Aufnehmen und Pressen von landwirtschaftlichem Erntegut zu rollenförmigen Ballen dargestellt. Für die Erstellung eines hier nicht näher dargestellten Erntegutballens ist eine Mehrzahl von Maschinenaggregaten vorgesehen. Eine Aufnahmevorrichtung 2 sammelt Erntegut vom Boden auf und leitet es in eine Wickelkammer 3 weiter. Ein Antriebs- und Steuerungsaggregat 4 bietet Kopplungsmöglichkeiten für eine vom Schlepperfahrzeug aus betriebene Antriebswelle.

In der Wickelkammer 3 wird der Erntegutballen dadurch geformt, dass durch die Einlassöffnung 6 in die Wickelkammer 3 transportiertes Erntegut mit Hilfe einer Ballenformeinrichtung 7 in Rotation versetzt wird und sich das neu hinzukommende Material entsprechend an den Mantelflächen des sich bildenden Erntegutballens anlagert. Die in Figur 1 dargestellte Ballenformeinrichtung ist in zwei endlos umlaufende Abschnitte 8, 12 eingeteilt. Der vordere Abschnitt 8 wird von einer Antriebsrolle 9 angetrieben und läuft zusätzlich zu dieser gehäusefesten Antriebsrolle 9 über eine weitere gehäusefeste Umlenkung 11. In ähnlicher Art und Weise ist der hintere Abschnitt 12 von einer Antriebsrolle 13 angetrieben und läuft ebenfalls über gehäusefeste Umlenkungen 14.

Um eine Anlage der inneren Abschnitte an dem sich bildenden Erntegut zu gewährleisten, bilden mehrere Schwenkarme 16, 17, 18 die Ballenformeinrichtung 7 flexibel anpassbar und an den Erntegutballen anpressbar aus.

Der Schwenkarm 16 ist mit einem Hebelarm 19 drehfest verbunden und um eine Achse 21 verschwenkbar. Am Ende des Hebelarms 16 befinden sich zwei Umlenkungen 23, die dicht beieinander liegen und somit eine gemeinsame Führung der beiden Abschnitte 8 und 12 der Ballenformeinrichtung 7 gewährleisten.

Der mittlere Schwenkarm 17 und der hintere Schwenkarm 18 befinden sich in Eingriff mit den Leertrums der Abschnitte 8, 12 und werden ebenfalls über Hebelarme 24 und 26 gemeinsam um Schwenkachsen 27 bzw. 28 geschwenkt.

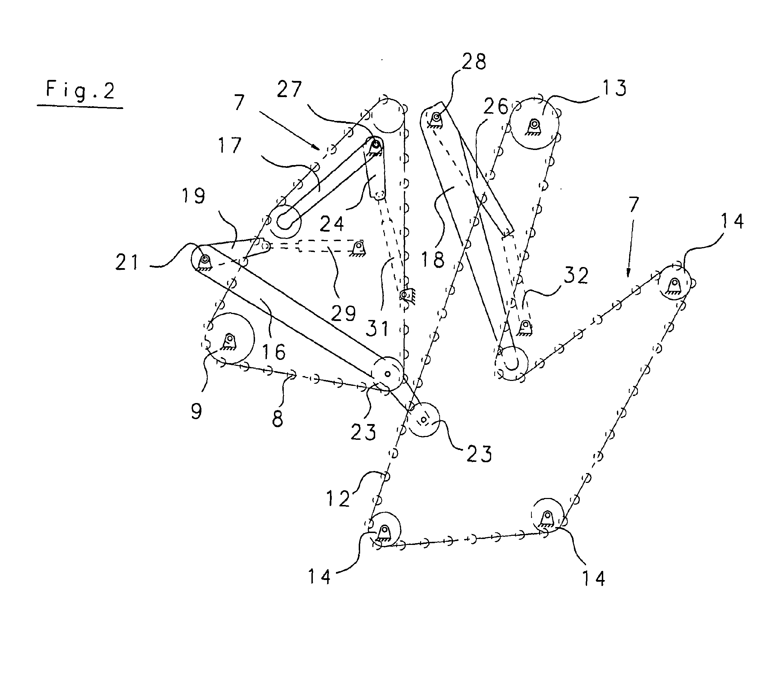

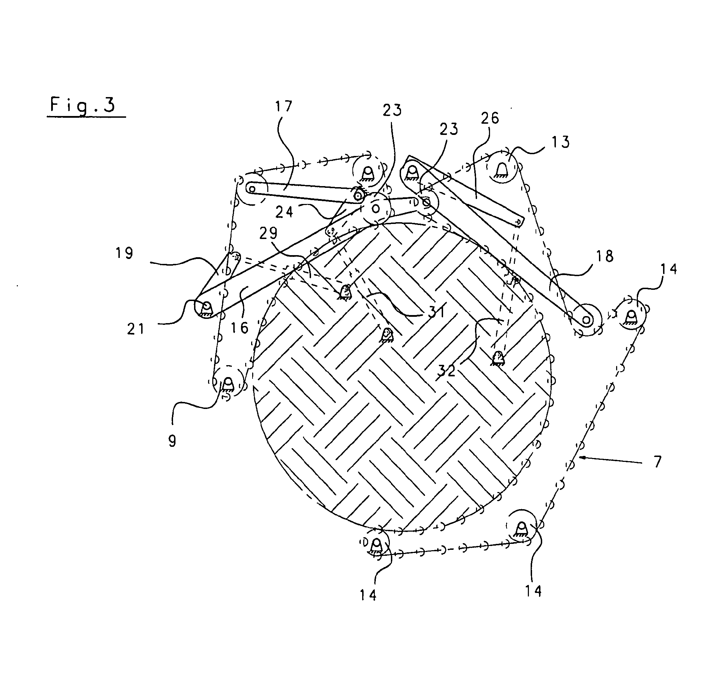

Um die Ballenformeinrichtung 7 ständig in Anlage mit dem sich bildenden Heuballen zu halten und um den für eine Verdichtung des Erntegutballens notwendigen Pressdruck aufzubauen, sind die Schwenkarme 16, 17, 18 mit der daran befindlichen Ballenformeinrichtung 7 aus der in Figur 2 befindlichen Ausgangspositionen in die in Figur 3 gezeichnete Endposition überführbar. Diese Endposition ist abhängig vom jeweiligen Erntegutballendurchmesser und ist variabel einstellbar. Ersichtlich zeigt die in Figur 3 abgebildete Anordnung der Schwenkarme 16, 17, 18 mit den jeweiligen Abschnitten 8, 12 eine Endposition, die einem Maximaldurchmesser eines Erntegutballens entspricht.

Mit wachsendem Ballendurchmesser wird die Spannung, welche sich aus der Spannkraft der Zylinder 29, 31 und 32 und der Geometrie der Spannarme 16 17 18 für die Ballenformeinrichtung 7 ergeben, linear dem wachsenden Durchmesser angepasst, und zwar dergestalt, dass ein etwa linear ansteigender Verlauf im Verhältnis zum Ballendurchmesser bezüglich der auf die Ballenformeinrichtung 7 einwirkenden Spannung darstellbar ist. Dieser lineare Verlauf der Spannung berücksichtigt die Zunahme des Durchmessers des zu formenden Ballens, so dass beim Ballenformvorgang ein Erntegutballen entsteht, der eine gleichbleibend hohe Pressdichte hat.

Mit wachsendem Ballen fährt der Zylinder 29, der auf der Kolbenstangenseite angesteuert ist, aus und gibt entsprechend der Verstellung des Kolbens eine bestimmte Menge Fluid ab. Ebenso fährt mit größer werdendem Erntegutballen der Zylinder 32 aus, der ebenfalls auf der Kolbenstangenseite mit einem Druckleitungsanschluss versehen ist, und gibt entsprechend Fluid ab. Die von den beiden Zylindern 29 und 32 abgegebene Menge Fluid wird bei diesem Ausführungsbeispiel zu mindestens fünfundsiebzig Prozent von dem Zylinder 31 aufgenommen, der für die Spannung des vorderen Abschnitts 8 zuständig ist und ebenfalls ausfahren muss. So ergibt sich der in Figur 3 dargestellte Extremzustand mit einem maximal großen Erntegutballen.

Es ist offensichtlich, dass je nach Ansteuerung der Hebelarme 19, 24 und 26 die Zylinder 29, 31, 32 auch anders druckbeaufschlagt werden können. Wichtig ist hierbei lediglich, dass ein Teil der Zylinder 29, 31, 32 gegensinnig druckbeaufschlagt ist, d. h. auf der anderen Seite des Kolbens, als der übrige Teil der Zylinder.

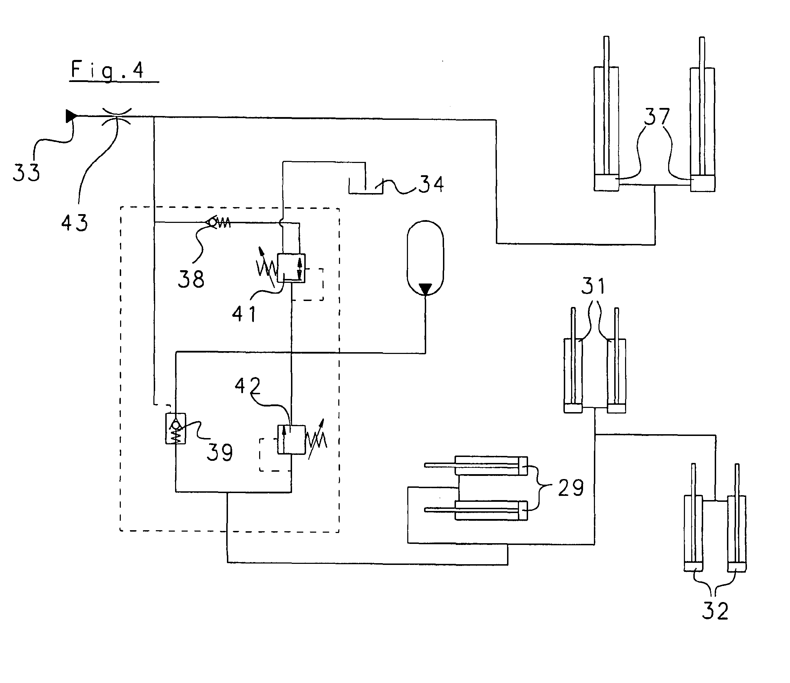

Die in Figur 4 dargestellte Schaltskizze verdeutlicht die Ansteuerung der jeweiligen Zylinder 29, 31, 32. Da in Fahrtrichtung links und rechts des Erntegutballens jeweils identische Anordnungen von Zylindern 29, 31, 32 vorgesehen sind, werden diese auch gleichzeitig angesteuert und sind in der Figur 4 als Zylinderpaare dargestellt. Ersichtlich handelt es sich bei den Zylindern 29 um Zugzylinder, dass heißt sie fahren bei Zuführung von Fluid ein, bei den Zylindern 31 um Druckzylinder, die bei Zuführung von Fluid ausfahren, und bei den Zylindern 32 wiederum um Zugzylinder. Neben einem Druckanschluss 33 sind ein freier Rücklauf 34, sowie eine Ventilanordnung zur Steuerung der Zylinder 29, 31, 32 gezeigt. Die beiden ebenfalls dargestellten Zylinder 37 dienen der Öffnung des Maschinengehäuses beim Entladen eines fertigen Erntegutballens.

Beim Öffnen der Heckklappe, die der Betätigung der Zylinder 37 entspricht, wird gleichzeitig durch den dann am Eingang 33 anliegenden Systemdruck das entsperrbare Rückschlagventil 39 geöffnet. Hierdurch kann das Druckbegrenzungsventil 42 umgangen werden und der Druck in den Spannzylindern 29, 31, 32 sinkt auf das am Druckregelventil 41 einstellbare Druckniveau für den schlupffreien Weiterbetrieb der Ballenformeinrichtung 7, beispielsweise auf 20 oder 30 bar. Nachdem der Ballen ausgeworfen wurde, befinden sich die Zylinder 29, 31 und 32 in einer Zwischenstellung, die hier nicht gezeigt ist.

Zum Schließen der Heckklappe wird der Druckanschluss 33 drucklos geschaltet und die Zylinder 37 geben ein Fluidvolumen ab, welches wegen der Drosselung 43, welche einen Staudruck erzeugt, zumindest teilweise in den Rest des Systems zurück fließt. Damit werden die Zylinder 29, 31 und 32 wieder in ihre Ausgangsposition gebracht. Gleichzeitig ist auch das Rückschlagventil 39 wieder gesperrt, so dass bei einem wachsenden Erntegutballen im wesentlichen sofort wieder der notwendige Pressdruck von der Ballenformeinrichtung ausgeübt werden kann. Der insgesamt auf den Erntegutballen wirkende Pressdruck wird durch das Druckregelventil 41 und das Druckbegrenzungsventil 42 eingestellt, wobei wie bereits erwähnt das Druckregelventil 41 den Restdruck im System während des Öffnens der Maschine 1 zum Auswerfen eines Erntegutballens regelt und das Druckbegrenzungsventil 42 auf die Differenz zwischen dem Restdruck zur Vermeidung von Schlupf zwischen Antriebstollen und Ballenformeinrichtung 7 während des Öffnens und dem gewünschten Pressdruck eingestellt ist.

## Patentansprüche

1. Maschine zum Aufnehmen und Pressen von landwirtschaftlichem Erntegut wie beispielsweise Heu, Stroh, Gras oder dergleichen zu rollenförmigen Ballen mit einer, eine aufklappbare Heckklappe umfassenden Wickelkammer, die eine mit einer Spannkraft eines Spannkrafterzeugers beaufschlagbare Ballenformeinrichtung (7,8,12) aufweist, **dadurch gekennzeichnet, dass** automatisch mit Betätigung der Heckklappe im Öffnungssinne die Spannkraft des Spannkrafterzeugers (29,31,32) selbsttätig auf eine vorgebbare für einen schlupffreien Weiterbetrieb der Ballenformeinrichtung (7,8,12) ausreichende Spannkraft reduzierbar ist.

2. Maschine nach Anspruch 1, **dadurch gekennzeichnet, dass** die vorgebbare Spannkraft bei Einleitung des Schließvorgangs der Heckklappe zunächst haltbar ist.

3. Maschine nach Anspruch 1 oder 2, **dadurch gekennzeichnet, dass** die Kraft des Spannkrafterzeugers (32) mit Betätigung der Heckklappe im Schließsinn auf eine Heckklappenschließkraft erhöhbar ist.

4. Maschine nach einem der Ansprüche 1 bis 3 mit einer ersten und einer zweiten Ballenformeinrichtung (7,8,12), **dadurch gekennzeichnet, dass** ein Spannkrafterzeuger (29) sowohl der ersten als auch der zweiten Ballenformeinrichtung (7,8,12) zugeordnet ist.

5. Maschine nach einem der Ansprüche 1 bis 4, **dadurch gekennzeichnet, dass** die Spannkraft eines Spannkrafterzeugers (29,31,32) über einen Spannarm (17,18,19) übertragbar ist.

6. Maschine nach einem der Ansprüche 1 bis 5, **dadurch gekennzeichnet, dass** die Spannkrafterzeuger (29,31,32) Hydraulikzylinder sind, die mit Betätigung der Heckklappe mit einen reduzierten Druck größer null bar im Öffnungssinn beaufschlagbar sind

7. Maschine nach einem der Ansprüche 1 bis 6, **dadurch gekennzeichnet, dass** die Spannkrafterzeuger mit einem Fluid befüllbare mit einander gekoppelte Zylinder sind, wobei im Betrieb eine erste Anzahl der Zylinder (29,31,32) eine Menge Fluid aufnimmt, die der einer zweiten Anzahl der Zylinder (29,31,32) abgegebenen Menge Fluid im Sinne eines Medienaustausches zumindest teilweise entspricht.

8. Maschine nach Anspruch 7, **dadurch gekennzeichnet, dass** eine Steuervorrichtung zum Betrieb der Zylinder (29,31,32) mit einem Druckbegrenzungsventil (41,42) vorgesehen ist, welches den an den Zylindern (29,31,32) anliegenden Druck auf ein regelbares Maximum begrenzt.

9. Maschine nach Anspruch 7 oder 8, **dadurch gekennzeichnet, dass** ein Druckspeicher (36) zur Aufnahme der nicht von einem Teil der Zylinder (29,31,32) aufgenommenen Menge Fluid vorgesehen ist.

## Claims

1. Machine for picking up and pressing harvested agricultural crops, such as hay, straw, grass and the like, into bales in roll form, having a baling chamber which comprises a rear flap able to be folded up and which has a bale-forming means (7, 8, 12) to which a tensioning force from a tensioning-force generator is able to be applied, **characterised in that**, automatically on actuation of the rear flap in the opening direction, the tensioning force from the tensioning-force generator (29, 31, 32) is able to be reduced automatically to a presettable tensioning force which is sufficient for the bale-forming means (7, 8, 12) to continue operating without any slip.

2. Machine according to claim 1, **characterised in that** the presettable tensioning force can initially be maintained when the process of closing the rear flap is initiated.

3. Machine according to claim 1 or 2, **characterised in that**, on actuation of the rear flap in the closing direction, the force from the tensioning-force generator (32) can be increased to a rear-flap closing force.

4. Machine according to one of claims 1 to 3 having a first and a second bale-forming means (7, 8, 12), **characterised in that** one tensioning-force generator (29) is associated with both the first and the second bale-forming means (7, 8, 12).

5. Machine according to one of claims 1 to 4, **characterised in that** the tensioning force from a tensioning-force generator (29, 31, 32) can be transmitted by means of a tensioning arm (17, 18, 19).

6. Machine according to one of claims 1 to 5, **characterised in that** the tensioning-force generators (29, 31, 32) are hydraulic cylinders to which, on actuation of the rear flap, a reduced pressure greater than zero bars can be applied in the opening direction.

7. Machine according to one of claims 1 to 6, **characterised in that** the tensioning-force generators are cylinders which are coupled together and to which a fluid can be applied, a first number of the cylinders (29, 31, 32) receiving, in operation, a quantity of fluid which, for the purpose of an exchange of medium, at least partly corresponds to the quantity of fluid which is discharged to a second number of the cylinders (29, 31,32).

8. Machine according to claim 7, **characterised in that** a control arrangement for operating the cylinders (29, 31, 32) is provided with a pressure-limiting valve (41, 42) which limits the pressure applied to the cylinders (29, 31, 32) to a regulatable maximum.

9. Machine according to claim 7 or 8, **characterised in that** a pressure reservoir (36) is provided to receive the amount of fluid which is not received by some of the cylinders (29, 31, 32).

## Revendications

1. Machine pour ramasser et presser des produits de récoltes, agricoles, tels que par exemple du foin, de la paille, de l'herbe ou des produits analogues pour réaliser des balles en forme de rouleaux, comportant une chambre d'enroulement avec un volet arrière s'ouvrant, et comportant une installation de formage de balles (7, 8, 12) sollicitée par la force de tension d'un générateur de force de tension,
**caractérisée en ce qu'**
avec l'actionnement du volet arrière dans le sens de l'ouverture, la force de serrage du générateur de force de serrage (29, 31, 32) est réduite automatiquement à une force de serrage prédéfinie, suffisante pour une poursuite du fonctionnement de l'installation de formage de balles (7, 8, 12) sans patinage.

2. Machine selon la revendication 1,
**caractérisée en ce que**
la force de serrage prédéfinie est d'abord retenue lorsqu'on lance l'opération de fermeture du volet arrière.

3. Machine selon la revendication 1 ou 2,
**caractérisée en ce que**
la force du générateur de force de serrage (32) est augmentée jusqu'à une force de fermeture du volet arrière par l'actionnement du volet arrière dans le sens de la fermeture.

4. Machine selon l'une des revendications 1 à 3,
comportant une première et une seconde installation de formage de balles (7, 8, 12),
**caractérisée par**
un générateur de force de serrage (29) associé à la fois à la première et à la seconde installation de formation de balles (7, 8, 12).

5. Machine selon l'une des revendications 1 à 4,
**caractérisée en ce que**
la force de serrage d'un générateur de force de serrage (29, 31, 32) se transmet par un bras de tension (17, 18, 19).

6. Machine selon l'une des revendications 1 à 5,
**caractérisée en ce que**
les générateurs de force de serrage (29, 31, 32) sont des vérins hydrauliques sollicités par l'actionnement du volet arrière par une pression réduite, supérieure à zéro dans le sens de l'ouverture.

7. Machine selon l'une des revendications 1 à 6,
**caractérisée en ce que**
les générateurs de force de serrage sont des vérins remplis d'un fluide et couplés les uns aux autres et en fonctionnement, un premier nombre de vérins (29, 31, 32) reçoit une certaine quantité de fluide qui correspond au moins en partie à la quantité de fluide délivrée par un second nombre de vérins (29, 31, 32) dans le sens d'un échange de fluides.

8. Machine selon la revendication 7,
**caractérisée par**
un dispositif de commande pour la gestion des vérins (29, 31, 32) avec une soupape de limitation de pression (41, 42) qui limite à un maximum réglable, la pression appliquée aux vérins (29, 31, 32).

9. Machine selon la revendication 7 ou 8,
**caractérisée par**
un accumulateur de pression (36) pour recevoir la quantité de fluide non prise par une partie des vérins (29, 31, 32).
